# EUROPÄISCHE PATENTANMELDUNG

(11) **EP 1 197 314 A2**
(43) Veröffentlichungstag der Anmeldung: **17.04.2002**
(21) Anmeldenummer: 01119015.4
(22) Anmeldetag: 07.08.2001
(51) Int. Cl.: B29C 65/02

(54) **Vorrichtung zum Verschweissen von Fussbodenbelägen**

(30) Priorität: 11.10.2000 DE 10050139
(71) Anmelder: Fitterer, Christian, 76287 Rheinstetten (DE)
(72) Erfinder: Fitterer, Christian, 76287 Rheinstetten (DE)
(74) Vertreter: Dimmerling, Heinz, Dipl.-Ing.

(57) **Zusammenfassung**

Eine Vorrichtung zum Verschweißen von Fußbodenbelägen weist einen Schweißautomaten (1) auf, mittels welchem der Belag im Bereich einer vorgefrästen Fuge zusammenschweißbar ist, und welcher einen Vortrieb hat. Es ist eine Halterung (3) vorgesehen, mittels welcher eine Fungefräse (2), in einem vorbestimmten Abstand von dem Schweißautomaten (1) anordenbar ist. Die Fugenfräse (2) weist ein vorderes sich um eine erste Achse (12) drehbares Rad (2a) auf, mittels welchem sie auf dem Fußboden abstützbar ist, und welches zur Lenkung der Fugenfräse (2) um eine zweite Achse verdrehbar ist.

## Beschreibung

Die Erfindung betrifft eine Vorrichtung zum Verschweißen von Fußbodenbelägen nach dem Oberbegriff des Anspruchs 1, mit einem Schweißautomaten, mittels welchem der Belag im Bereich einer vorgefrästen Fuge zusammenschweißbar ist, und welcher einen Vortrieb hat.

Es ist bekannt, aus Platten oder Bahnen bestehende PVC-Fußböden an den Stoßstellen zu verschweißen. Hierzu bedient man sich regelmäßig eines Schweißautomaten, welcher ein mit einem Vortrieb versehenes fahrbares Gestell aufweist, an welchem einerseits eine Vorratsrolle für eine PVC-Schweißschnur und andererseits ein Brenner befestigt ist. Die PVC-Schweißschnur wird mittels einer Führungsrolle in eine zuvor gefräste Fuge gedrückt.

Das Fräsen der Fuge geschieht regelmäßig in einem separaten Arbeitsgang vor dem Schweißen. Zum Fräsen der Fuge bedient man sich regelmäßig einer sogenannten Fugenfräse. Die Fugenfräse wird zum Fräsen auf den Fußboden aufgesetzt und längs der Stoßstelle verfahren.

Fugenfräse sowie Schweißautomat sind selbständige Geräte, welche vollkommen unabhängig voneinander in unterschiedlichen Arbeitsgängen verwendet werden. Das Erstellen der Fuge in einem separaten Arbeitsgang ist jedoch im Hinblick auf die Kosten nachteilig.

Des weiteren muß die Fugenfräse an Stellen, an denen die Stoßstelle des Bodenbelags einen Versatz aufweist, entsprechend dem Versatz auf dem Belag verschoben werden. Hierzu muß der vordere Bereich der Fugenfräse entsprechend dem Versatz etwas seitlich verschoben werden. Nachdem die Fugenfräse eine genügend große seitliche Bewegung vollzogen hat, wird der vordere Bereich der Fugenfräse wieder in seine ursprüngliche Stellung gebracht, so daß die Fugenfräse längs der versetzten Stoßstelle über dem Boden verfahren wird.

Es ist somit erforderlich, den Boden genau zu beobachten, um festzustellen, ob die Stoßstellen des Bodenbelags einen Versatz aufweist. Des weiteren muß manuell dafür Sorge getragen werden, daß der Verlauf der Fugenfräse entsprechend dem Versatz geschieht.

Es ist Aufgabe der Erfindung, eine eingangs genannte Vorrichtung derart auszubilden, daß sich der Aufwand zur Erstellung der Fuge verringert.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist eine Vorrichtung zum Verschweißen von Fußbodenbelägen nach dem Oberbegriff des Anspruchs 1, mit einem Schweißautomaten, mittels welchem der Belag im Bereich einer vorgefrästen Fuge zusammenschweißbar ist, und welcher einen Vortrieb hat dadurch gekennzeichnet, daß eine Halterung vorgesehen ist, mittels welcher eine Fugenfräse, in einem vorbestimmten Abstand von dem Schweißautomaten anordenbar ist, wobei die Fugenfräse ein vorderes sich um eine erste Achse drehbares Rad aufweist, mittels welchem sie auf dem Fußboden abstützbar ist, und welches zur Lenkung der Fugenfräse um eine zweite Achse verdrehbar ist.

Dadurch, daß die Fugenfräse über eine Halterung mit dem Schweißautomaten verbunden ist, läßt sie sich gleichzeitig mit dem Schweißautomaten verwenden. Durch die Halterung macht die Fugenfräse dieselben Bewegungen mit, wie der Schweißautomat. Die Fugenfräse wird somit gleichzeitig mit dem Schweißautomaten auf dem Fußboden verfahren. Hierdurch wird, während der Fußboden mittels des Schweißautomaten verschweißt wird, gleichzeitig in dem vorbestimmten Abstand zum Schweißautomaten eine Fuge gefräst. Die Fugenfräse kann mittels der Halterung vor dem Schweißautomaten angeordnet sein. Bei einer derartigen Anordnung ist es nicht erforderlich, daß die erste Fuge in einem gesonderten Arbeitsgang hergestellt wird. Bereits die erste Fuge kann daher mittels der erfindungsgemäßen Vorrichtung hergestellt werden.

Die Fugenfräse kann mittels der Halterung aber auch seitlich an dem Schweißautomaten befestigt sein. Bei einer derartigen Anordnung muß die erste Fuge noch in einem gesonderten Arbeitsgang hergestellt werden. Die weiteren Fugen werden dann gleichzeitig mit dem Verschweißen des Fußbodens hergestellt. Es ist somit bis auf die erste Fuge nicht mehr erforderlich, die Fuge in einem gesonderten Arbeitsgang herzustellen.

Dadurch, daß die Fuge nicht mehr in einem gesonderten Arbeitsgang hergestellt werden muß, ergibt sich eine sehr große Kosteneinsparung.

Eine wesentliche Verbesserung wird auch dadurch erreicht, daß das vordere Rad der Fugenfräse zur Lenkung der Fugenfräse um eine Achse verdrehbar ist. Hierdurch läßt sich die Fugenfräse auf einfache Weise bei einem Versatz der Stoßstelle der zu verschweißenden Fußbodenbelägen an die versetzte Stoßstelle anpassen. Durch eine Lenkbewegung kann die Fugenfräse somit dem Versatz der Stoßstelle folgen.

Durch eine derartige Ausführungsform wird die Möglichkeit eröffnet, die erfindungsgemäße Vorrichtung fembedienbar zu gestalten. Hierzu muß lediglich gewährleistet werden, daß die Verdrehung des vorderen Rades mittels eines fernbedienbaren Antriebs erfolgt, wie dies bei einer besonderen Ausführungsform der Erfindung vorgesehen ist.

Als besonders vorteilhaft hat sich auch eine Ausführungsform der Erfindung herausgestellt, bei der eine Kamera vorhanden ist, mittels welcher die Stoßstelle zwischen zwei zu verschweißenden Belägen überwachbar ist. Dadurch, daß die Stoßstelle mittels einer Kamera überwachbar ist, braucht sich eine Bedienperson nicht mehr in unmittelbarer Nähe der erfindungsgemäßen Vorrichtung aufzuhalten. Die Bedienperson könnte sich in einem separaten Raum aufhalten, wodurch sie nicht mehr einer Lärm- oder Staubbelästigung ausgesetzt wäre.

Besonders zweckmäßig bei einer letztgenannten Ausführungsform ist es, wenn die Kamera derart angeordnet ist, daß die Stoßstelle unmittelbar vor dem vorderen Rad der Fugenfräse überwachbar ist. Hierdurch läßt sich die Fugenfräse und damit die erfindungsgemäße Vorrichtung sehr präzise steuern.

Als besonders vorteilhaft hat sich auch eine Ausführungsform der Erfindung herausgestellt, bei der der Vortrieb des Schweißautomaten fernbedienbar ist. Hierdurch läßt sich auf einfache Weise die Geschwindigkeit des Schweißautomaten an die augenblicklichen Verhältnisse anpassen. Die Fernbedienung kann mittels eines Kabels mit der erfindungsgemäßen Vorrichtung verbunden sein. Besonders vorteilhaft ist es jedoch, wenn die Fernbedienung als Funk-Fernbedienung ausgelegt ist.

Besonders vorteilhaft ist auch eine Ausführungsform der Erfindung, bei der die Fugenfräse verstellbar in der Halterung angeordnet ist. Die Verstellbarkeit kann sich einerseits auf die vertikale Ausrichtung der Fugenfräse beziehen, und andererseits auf die horizontale Ausrichtung der Fugenfräse. Durch die Verstellbarkeit der Fugenfräse ist es möglich, auf die Ausbildung der Fuge Einfluß zu nehmen. Darüber hinaus läßt sich durch die Verstellbarkeit der Fugenfräse in der Halterung ein Fehler, wie er durch eine nicht exakte Ausrichtung der Halterung auftreten könnte, korrigieren.

Besonders vorteilhaft ist auch eine Ausführungsform der Erfindung, bei der die Energieversorgung der Fugenfräse über die Halterung erfolgt. Hierbei kann vorgesehen sein, daß an der Halterung im Bereich der Fugenfräse eine Steckdose angeordnet ist, über die die Fugenfräse mit Strom versorgt wird. Die Zuleitung der Fugenfräse kann dann sehr kurz ausgebildet sein. Hierdurch wird eine Beeinträchtigung durch die Zuleitung der Fugenfräse vermieden.

Als besonders vorteilhaft hat sich auch eine Ausführungsform der Erfindung herausgestellt, bei der im Bereich des Schweißautomaten ein Schalter angeordnet ist, zum Ein- oder Ausschalten der Fugenfräse. Hierdurch läßt sich die Fugenfräse sehr einfach Ein- oder Ausschalten. Dies ist besonders im Falle einer Störung von großem Vorteil, da die den Schweißautomaten bedienende Person die Fugenfräse ohne weiteres ausschalten kann.

Bei einer weiteren besonderen Ausführungsform der Erfindung ist vorgesehen, daß ein Richtungselement vorhanden ist, zur Erfassung der Richtung, in die der Schweißautomat bewegt wird. Hierdurch läßt sich auf einfache Weise gewährleisten, daß der Schweißautomat in einer exakten Richtung über den Fußboden bewegt wird, was sehr wichtig ist, da die Fugenfräse durch eine Schwenkbewegung des Schweißautomaten eine entsprechend dem Abstand zum Schweißautomaten vergrößerte Kreisbewegung durchführt. Zur Herstellung einer geraden Fuge ist daher es sehr wichtig, daß der Schweißautomat möglichst gradlinig bewegt wird.

Als besonders vorteilhaft hat sich eine Ausführungsform der Erfindung herausgestellt, bei der die Halterung zur Aufnahme eines handelsüblichen Schweißautomaten und einer handelsüblichen Fugenfräse geeignet ist. Hierdurch lassen sich herkömmliche Geräte auf einfache Weise zu einer erfindungsgemäßen Vorrichtung ausbilden. Dies wirkt sich besonders günstig auf die Kosten aus.

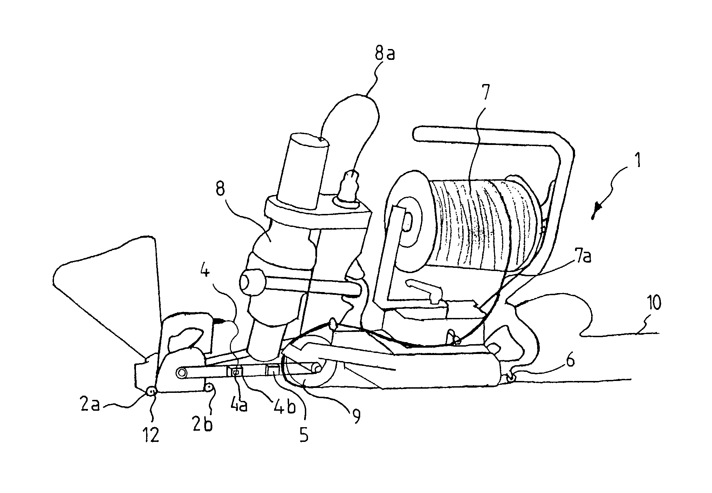

Weitere Merkmale und Einzelheiten der vorliegenden Erfindung ergeben sich aus der nachfolgenden Beschreibung eines besonderen Ausführungsbeispiels unter Bezugnahme auf die Zeichnung.

Es zeigt die einzige Figur eine besondere Ausführungsform der erfindungsgemäßen Vorrichtung.

Wie in der Zeichnung dargestellt, ist an einem Schweißautomaten 1 eine Halterung 3 angeordnet, an welchen an dem dem Schweißautomaten 1 abgewandten Ende eine Fugenfräse 2 befestigt ist. Die Energieversorgung der Fugenfräse 2 geschieht über eine Zuleitung 4, welche einen Stecker 4a aufweist, welcher in einer an der Halterung 3 angebrachten Steckdose 4b eingesteckt ist. Die Zuleitung zur Steckdose 4b verläuft in der Halterung 3. In unmittelbarer Nähe des Schweißautomaten 1 ist an der Halterung 3 ein Schalter 5 angeordnet, mittels welchem die Stromzufuhr zur Steckdose 4b unterbrochen werden kann. Die Stromzufuhr zum Schalter 5 geschieht über den nicht dargestellten Schalter zum Ein- beziehungsweise zum Ausschalten des Schweißautomaten.

Die Fugenfräse 2 ist mittels eines vorderen Rades 2a und mittels eines hinteren Rades 2b auf dem Boden abgestützt. Das vordere Rad 2a ist um eine erste Achse 12 drehbar. Des weiteren ist das vordere Rad 2a so mit der Fugenfräse 2 verbunden, daß es zur Lenkung der Fugenfräse 2 um eine zweite nicht gezeigte Achse verdrehbar ist. Die zweite Achse ist etwa senkrecht zur ersten Achse 12 angeordnet. Die Drehung des vorderen Rades 2a um die zweite Achse sowie der Vortrieb des Schweißautomaten läßt sich mittels einer in der Figur nicht dargestellten Fernbedienung steuern.

Die Halterung 3 kann beliebig ausgebildet sein. Es ist jedoch zu beachten, daß sie eine genügend große Steifigkeit besitzt, so daß die Fugenfräse 2 möglichst starr mit dem Schweißautomaten 1 verbunden ist. Die Befestigung der Halterung 3 an dem Schweißautomaten 1 hängt von den baulichen Gegebenheiten des Schweißautomaten 1 ab. Zur Verwirklichung des erfindungsgemäßen Gedankens ist eine spezielle Befestigung der Halterung 3 an dem Schweißautomaten 1 nicht erforderlich. Die Befestigung der Halterung 3 an dem Schweißautomaten 1 steht im Belieben des Fachmanns und kann auf herkömmliche Weise geschehen.

Ebenso steht die Befestigung der Fugenfräse 2 an der Halterung 3 im Belieben des Fachmanns. Sie richtet sich ebenfalls nach den baulichen Gegebenheiten der Fugenfräse 2 und kann auf herkömmliche Weise geschehen.

Bei dem Schweißautomaten 1 handelt es sich um einen herkömmlichen Schweißautomaten. Er weißt im wesentlichen eine Vorratsspule 7 für eine PVC-Schweiß-schnur 7b auf. Die PVC-Schweiß-schnur wird um eine Führungsrolle 9 umgelenkt und mittels der Führungsrolle 9 in eine zuvor gefräste Fuge gedrückt. In einem Abstand von der Führungsrolle 9 ist ein als Rad ausgebildetes Richtungselement 6 angeordnet. Durch das Führen des Rades 6 in der Fuge wird erreicht, daß der Schweißautomat 1 gradlinig vorwärts bewegt wird.

Unmittelbar vor der Führungsrolle 9 ist ein Brenner 8 angeordnet. Der Brenner 8 ist elektrisch betrieben. Der Brenner 8 erhält seine elektrische Energie über eine Zuleitung 8a. Zur Gesamtversorgung des Schweißautomaten 1 und der Fugenfräse 2 ist eine Zuleitung 10 vorgesehen.

## Patentansprüche

1. Vorrichtung zum Verschweißen von Fußbodenbelägen, mit einem Schweißautomaten (1), mittels welchem der Belag im Bereich einer vorgefrästen Fuge zusammenschweißbar ist, und welcher einen Vortrieb hat,
**dadurch gekennzeichnet,**
**daß** eine Halterung (3) vorgesehen ist, mittels welcher eine Fugenfräse (2), in einem vorbestimmten Abstand von dem Schweißautomaten (1) anordenbar ist, wobei die Fugenfräse (2) ein vorderes sich um eine erste Achse (12) drehbares Rad (2a) aufweist, mittels welchem sie auf dem Fußboden abstützbar ist, und welches zur Lenkung der Fugenfräse (2) um eine zweite Achse verdrehbar ist.

2. Vorrichtung nach Anspruch 1,
**dadurch gekennzeichnet,**
**daß** die Verdrehung des vorderen Rades (2a) mittels eines fernbedienbaren Antriebs erfolgt.

3. Vorrichtung nach Anspruch 1 oder 2,
**dadurch gekennzeichnet,**
**daß** die Kamera (11) vorhanden ist, mittels welcher die Stoßstelle zwischen zwei zu verschweißenden Belägen überwachbar ist.

4. Vorrichtung nach Anspruch 3,
**dadurch gekennzeichnet,**
**daß** eine Kamera (11) derart angeordnet ist, daß die Stoßstelle unmittelbar vor dem vorderen Rad (2a) der Fugenfräse (2) überwachbar ist.

5. Vorrichtung nach einem der Ansprüche 1 bis 4,
**dadurch gekennzeichnet,**
**daß** der Vortrieb des Schweißautomaten (1) fernbedienbar ist.

6. Vorrichtung nach einem der Ansprüche 1 oder 5,
**dadurch gekennzeichnet,**
**daß** die Fugenfräse (2) verstellbar in der Halterung (3) angeordnet ist.

7. Vorrichtung nach einem der Ansprüche 1 bis 6,
**dadurch gekennzeichnet,**
**daß** die Energieversorgung (4) der Fugenfräse (2) über die Haiterung erfolgt.

8. Vorrichtung nach einem der Ansprüche 1 bis 7,
**dadurch gekennzeichnet,**
**daß** im Bereich des Schweißautomaten (1) ein Schalter (5) angeordnet ist zum Ein- oder Ausschalten der Fugenfräse(2).

9. Vorrichtung nach einem der Ansprüche 1 bis 8,
**dadurch gekennzeichnet,**
**daß** ein Richtungselement (6) vorhanden ist, zur Erfassung der Richtung, in die der Schweißautomat (1) bewegt wird.

10. Vorrichtung nach einem der Ansprüche 1 bis 9,
**dadurch gekennzeichnet,**
**daß** die Halterung (3) zur Aufnahme eines handelsüblichen Schweißautomaten (1) und einer handelsüblichen Fugenfräse (2) geeignet ist.
